# EUROPEAN PATENT SPECIFICATION

(11) **EP 2 615 324 B1**
(45) Date of publication and mention of the grant of the patent: **26.04.2017**
(21) Application number: 10856926.0
(22) Date of filing: 08.09.2010
(51) Int. Cl.: F16D 69/02, B29C 70/06, F16D 69/00, F16D 51/10, F16D 121/22

(54) **METHOD FOR MANUFACTURING A BRAKE LINING**
VERFAHREN ZUR HERSTELLUNG EINES BREMSBELAGES
PROCÉDÉ DE FABRICATION DE GARNITURE DE FREIN

(43) Date of publication of application: 17.07.2013
(73) Proprietor: Mitsubishi Electric Corporation, Tokyo 100-8310 (JP)
(72) Inventor: OTA, Hitoshi, Tokyo 100-8310 (JP); HASHIMOTO, Akira, Tokyo 100-8310 (JP)
(74) Representative: Hoffmann Eitle
(86) International application number: PCT/JP2010/005496
(87) International publication number: WO 2012/032573

(56) References cited:
- GB-A- 1 309 147
- JP-A- 9 087 050
- JP-A- 63 218 739
- JP-A- 2004 516 222
- JP-A- 2010 189 184
- JP-U- H0 322 821
- JP-U- 49 058 988
- JP-U- 62 199 544
- US-A- 4 351 885

## Description

### Technical Field

The present invention relates to a method of manufacturing a brake lining suited for use in a braking mechanism for an elevator or the like.

### Background Art

Conventionally, in order to stably keep a friction coefficient of a lining for a brake, a method of mixing short fibers such as aramid fibers in a rubber base material to form the lining and performing a raising treatment by polishing with an abrasive so as to raise the fibers in a direction approximately orthogonal to a friction surface with a rotor is used (see Patent Literature 1).

Moreover, there exists a method of obtaining a large friction coefficient by, for example, processing a friction surface between a brake disc and a brake lining in the same direction as a direction of rotation of the brake disc with a lathe or the like. Further, the friction surface between the brake disc and the brake lining is processed in a direction traversing the direction of rotation of the brake disc to develop the deposition of wear particles on a processed line to transfer a lining material to the brake disc, thereby reducing wear (see Patent Literature 2).

Besides, there exists a method of mixing cork particles and organic fibers into the brake lining to form a lubricating film on a friction surface against a member to be brought into contact therewith to increase the friction coefficient (see Patent Literature 3).

A method for manufacturing a brake lining containing oriented glass fibres in a rigid binder is also known (see Patent Literature 4).

### Citation List

### Patent Literature

[PTL 1] JP 8-152033 A (paragraph 0019, FIG. 2)
[PTL 2] JP 2000-104765 A (paragraphs 0015 and 0018, FIGS. 3 and 5)
[PTL 3] JP 59-19732 A (pages 1 and 2)
[PTL 4] GB 1 309 147

### Summary of Invention

### Technical Problems

However, in the case where the fibers are raised after the short fibers or the like are mixed into the rubber base material, a direction of the fibers becomes parallel to a sliding direction over long-time use because of softness of the base material. As a result, there is a problem in that a scratching effect is lowered to gradually reduce the friction coefficient. Moreover, by the long-term use of the rubber, the rubber is plastically deformed. In general, a braking apparatus for a hoisting machine performs braking in a state in which the rotation of the rotor is stopped. Therefore, at the time of the braking performed by the brake, the lining is pressed against the rotor with a spring. On the other hand, when the brake is released, the braking apparatus is configured so as to separate the lining away from the rotor with an electromagnetic attraction force larger than a spring force. When the friction coefficient between the lining and the rotor is large, the spring force and the electromagnetic attraction force can be reduced. However, the lining is required to be additionally attracted by the amount of plastic deformation at the time when the brake is released. As described above, by an increase in the amount of stroke for attracting the lining, the electromagnetic attraction force is required to be increased. As a result, there are problems in an increase in power consumption and in an increase in size of the braking apparatus. Moreover, when the amount of plastic deformation is large, there is a fear in that the attraction of the lining becomes difficult to lower the reliability of equipment.

Further, in the case where the processed line is provided to the disc to transfer the wear particles thereto, there is a problem in that a change in a surrounding environment such as a temperature and a humidity varies a surface state of the disc or the lining to lower the friction coefficient. Therefore, there is a fear in that a stable braking force cannot be ensured.

Further, as a method of increasing the friction coefficient, there exists a method of processing a cork or a rubber which originally has a large friction coefficient into fine particles to mix the fine particles into the lining as a component of the lining. Depending on the size of the particles of the cork or the rubber, however, the particles drop off at the time of occurrence of friction to lower the friction coefficient. Therefore, it becomes difficult to stably keep the friction coefficient. Thus, the braking apparatus is designed prospectively taking a larger margin for a reduction in the friction coefficient into consideration. As a result, there arises a problem in that it becomes difficult to reduce the size of the braking apparatus.

The present invention has been made to solve the problems described above. The present disclosure provides a brake lining which enables a stable friction coefficient to be maintained between the lining and a rotor to reduce a force for pressing the lining against the rotor so as to reduce the size and weight of a braking apparatus, and enables a reduction in C0₂ emission at the time of manufacturing of the braking apparatus.

### Solution to Problems

The present invention is the method of manufacturing a brake lining of claim 1.

According to the present disclosure, there is provided a braking apparatus, including: a rotary body having a cylindrical shape, which is rotatable about a fixed shaft through a bearing; a fixed core including a coil built therein, which is provided on an inner side of the rotary body and is fixed to a housing for supporting the fixed shaft; a movable core, which is attracted to the fixed core through excitation of the coil to come into contact with the fixed core and is subjected to a repelling force by a spring provided to the fixed core; and a brake lining being a formed product capable of sliding against concave and convex portions provided on an inner circumferential surface of the rotary body, containing fibers arranged in a direction approximately perpendicular to a sliding direction, and being hardened by a blended material for bundling the fibers, the brake lining being provided to the movable core.

### Advantageous Effects

According to the present disclosure, the formed product includes the projections provided on the inner circumferential surface of the rotor and carbon fibers serving as a base material of the lining, arranged approximately perpendicularly to a direction in which the lining and the rotor slide against each other. Therefore, a mutual scratching effect is generated between the carbon fibers of the lining and the convexities and concavities on the inner circumferential surface of the rotor, while a resistance in the direction, in which the lining and the rotor slide against each other, increases. As a result, a stable friction coefficient can be maintained between the lining and the rotor. Therefore, by reducing a force for pressing the lining against the rotor, the size, weight, and power consumption of the braking apparatus can be reduced. Moreover, the effects of reducing C0₂ emission at the time of the manufacturing of the braking apparatus can be obtained.

### Brief Description of Drawings

[FIG. 1] A schematic diagram of structures of a hoisting machine and a braking apparatus according to a first embodiment.
[FIGS. 2] Schematic diagrams of a lining and a rotor according to the first embodiment.
[FIG. 3] A schematic diagram of the lining and the rotor according to the first embodiment.
[FIG. 4] A schematic diagram of a shape of an inner circumferential surface of the rotor according to the first embodiment.
[FIG. 5] A schematic diagram of the shape of the inner circumferential surface of the rotor according to the first embodiment
[FIGS. 6] Schematic diagrams illustrating a manufacturing method according to a second embodiment of the present invention.
[FIG. 7] A sectional view of the lining according to the second embodiment.
[FIG. 8] A sectional view of the lining according to the second embodiment.
[FIGS. 9] Sectional views of the lining according to the second embodiment.
[FIGS. 10] Schematic views of the lining and the rotor according to a third embodiment.
[FIG. 11] A graph showing a relationship between a friction coefficient and a sliding distance according to the third embodiment.
[FIG. 12] A schematic view of the lining according to the third embodiment.
[FIG. 13] A schematic view of a structure of an elevator system according to a fourth embodiment.

### Description of Embodiments

### First Embodiment

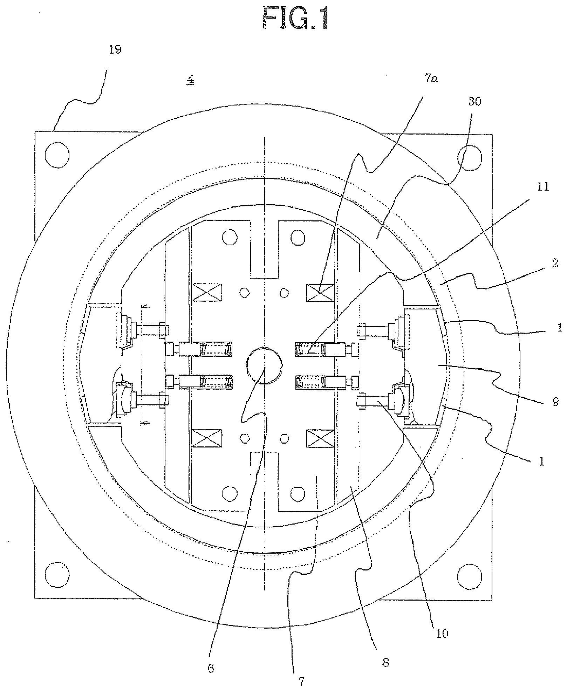

A configuration of a braking apparatus according to a first embodiment is described referring to the drawings. FIG. 1 illustrates a hoisting machine for an elevator, in which a brake lining and a rotor are present. The lining and the rotor described below are applicable not only to the hoisting machines for an elevator, but also to industrial equipment such as brakes for various types of tires of automobiles, electric motors, and hoists, brakes for motors, clutch systems, and the like. Although an example of an internal-expanding type braking apparatus is described below, the present disclosure is also applicable to braking apparatus using a friction member regardless of a braking method, such as a drum brake or a disc brake.

In FIG. 1, a housing 19 of a hoisting machine 4 is mounted to a floor of a machine room or a wall inside a hoistway for the elevator. In a central portion of the hoisting machine 4, a sheave (not shown) for suspending a rope connected to a car of the elevator is provided. A fixed shaft 6 having one end supported by the housing 19 is provided to a center of a rotor 2 having a cylindrical shape, the rotor being fixed to the sheave and rotating together with the sheave. The rotor 2 rotates about the fixed shaft 6 through a bearing which covers an outer circumferential surface of the fixed shaft 6. The sheave is mounted at a different level in a direction of the fixed shaft of the rotor 2 and rotates about the fixed shaft 6. Permanent magnets are provided on the outer circumferential surface of the rotor 2. A stator (not shown) including a coil built therein, which is disposed so as to face the outer circumferential surface of the rotor 2, is fixed to the housing 19.

A braking apparatus for the hoisting machine 4 includes a fixed core 7, movable cores 8, the rotor 2, and linings 1. The linings 1 are friction members for stopping the rotation of the rotor 2 corresponding to a rotary body and are fixed to each of shoes 9. Concave and convex portions which are provided to slide against the linings 1 are formed on the inner circumferential surface of the rotor 2 in the entire circumferential direction thereof. Supporting portions 30, which correspond to parts of the housing 19, face the inner circumferential surface of the rotor 2, and are subjected to a force acting on the shoes 9 by the rotation of the rotor 2. Moreover, around the fixed shaft 6 of the rotor, specifically, inside the rotor 2, the fixed core 7 having a U-like cross section, which does not rotate, is fixed to a part of the housing 19 by bolts. On one side of the fixed core 7, for example, two coils 7a are built therein. Each of the coils 7a is wound in a direction toward the far side of the fixed shaft 6. Moreover, the movable cores 8 are provided so as to respectively have clearances from the fixed core 7 so that the movable cores 8 function as electromagnets to attract the fixed core 7 when the coils 7a are energized to be excited. One end of each of springs 11 is fixed to a cylindrical sleeve. Another end of each of the springs 11 is fixed to the fixed core 7. Further, the sleeves are partially located inside the fixed core 7.

The movable cores 8 which move relative to the fixed core 7 respectively have the slight clearances from the fixed core 7 when the brake performs braking, specifically, when the rotor 2 and the linings 1 are held in sliding contact with each other. When the brake is released, that is, when the coils 7a are excited and therefore the rotor 2 and the linings 1 are not held in sliding contact with each other, the movable cores 8 are held in contact with the fixed core 7. Supporting bolts 10 are fixed to a surface of each of the movable cores 8, which is opposite to a side which comes into contact with the fixed core 7. The supporting bolts 10 are bolts for connecting the fixed cores 8 and the shoes 9. The linings 1 are fixed to each of the shoes 9 by an adhesive, screws, or the like. When the brake performs braking as illustrated in FIG. 1, the linings 1 fixed to each of the shoes 9 and the rotor 2 come into contact with other. When the brake is released, a clearance is generated between the rotor 2 and each of the linings 1. The clearance corresponds to the clearance formed between the fixed core 7 and each of the movable cores 8 when the brake performs braking.

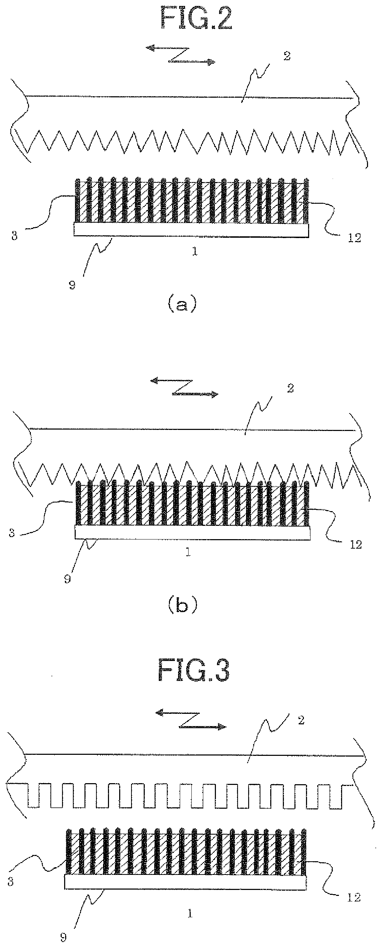

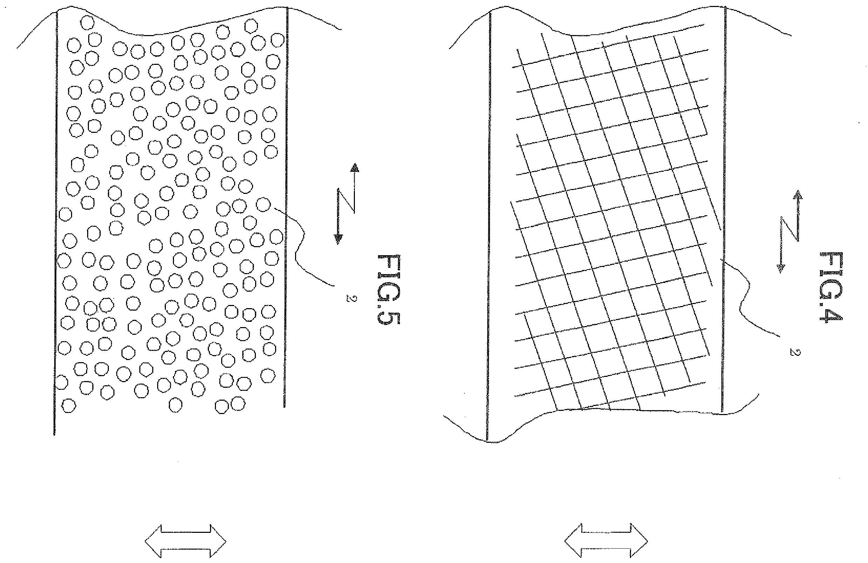

FIGS. 2(a) and 2(b) schematically illustrate the arrangement and the shapes of the linings 1 and the rotor 2 before and after the linings 1 and the rotor 2 according to the first embodiment slide against each other, that is, when the brake is released and when the brake performs braking, respectively. FIG. 3 schematically illustrates the arrangement and another shape of the rotor 2 of the hoisting machine, which slides against the linings 1 according to the first embodiment. Further, FIG. 4 schematically illustrates the shape of the inner circumferential surface of the rotor 2 according to the first embodiment. FIG. 5 schematically illustrates another shape of the inner circumferential surface of the rotor 2 according to the first embodiment.

In FIG. 2(a), the linings 1 contain carbon fibers 3 as a base material. The fibers are bonded to the shoes 9 in a state in which the fibers are hardened with a blended material 12 so as to be arranged at a higher density to become a formed product. When the brake is released, that is, when the rotor 2 is rotating, as illustrated in FIG. 2(a), the linings 1 are provided so as to face the rotor 2 in a state in which the clearances are generated so as to prevent the contact between the linings 1 and the rotor 2. On the other hand, in FIG. 2(b), the linings 1 and the rotor 2 are held in contact with each other. The linings 1 and the rotor 2 have the relationship in which the linings and the rotor slide relative to each other. The plurality of carbon fibers 3 having a high stiffness, which are arranged approximately perpendicularly to a sliding direction in which the linings and the rotor slide relative to each other, indicated by the arrows in the figures, are bound by the blended material 12 so as to be arranged at a higher density, and therefore the linings 1 have a further higher stiffness. Accordingly, even when the linings are pressed against the rotor 2, the linings do not break. Each of the carbon fibers 3 has, for example, a diameter of about 1 mm to 2 mm and a length of 7 to 10 mm.

By the linings 1, the inner circumferential surface corresponding to a surface of the rotor 2 on the inner side, that is, a braking surface of the rotor 2 performs braking. The inner circumferential surface is roughened by cutting, polishing, or the like in a direction toward the far side of the rotor 2 (radial direction of the rotor 2) so that the carbon fibers 3 of the linings 1 are caught in a direction of sliding against the rotor 2. The cutting of the inner circumferential surface is performed, for example, in the order of 10 microns to 20 microns. Byproviding the concavities and convexities having a depth on the inner circumferential surface of the rotor 2, a structure in which the carbon fibers 3 of the linings 1 and the concave and convex portions of the rotor 2 scratch each other is formed. The depths of the concave and convex portions of the rotor 2 in the direction to the far side of the rotor 2 are not required to be uniform. Further, the concavities and convexities may be provided in a slightly inclined direction. For example, a groove in a zigzag pattern can be obtained by processing with a method such as ball burnishing. The linings 1 integrated by the carbon fibers 3 arranged at a higher density fix the integrated carbon fibers 3 corresponding to the linings 1 and the shoes 9 to each other by an adhesive or the like so that surfaces of the shoes 9 and a length direction of the carbon fibers 3 become perpendicular to each other. It is not required to employ such a configuration that the carbon fibers 3 fit into the respective concave portions of the concave and convex portions of the rotor 2. As a material of the rotor 2, for example, an FC material, an FCD material, or the like is used. A thin film formed of a ceramic by sputtering or the like may be used for the inner circumferential surface of the rotor 2 alone.

The shape provided on the inner circumferential surface of the rotor 2 may be a rectangular shape as illustrated in FIG. 3. Such a shape may be obtained by processing with, for example, an etching-process method. A pitch between the carbon fibers 3 and the pitch between the concave and convex portions of the rotor 2 are not required to be equal to each other.

Further, the shape provided on the inner circumferential surface of the rotor 2 may be a shape illustrated in FIG. 4. FIG. 4 illustrates the shape of the inner circumferential surface of the rotor 2 as viewed from the linings 11 in a direction of the rotor 2. The inner circumferential surface of the rotor 2 is subjected to a texturing process. As a result, even when water is adsorbed in the inner circumferential surface of the rotor 2 due to an environmental fluctuation such as that in a temperature or a humidity, grooves are formed in various directions, and therefore water can be discharged, through the grooves, out of a region where the linings 1 and the rotor 2 are held in contact with each other. Therefore, even with an environmental change, a fluctuation in the friction coefficient can be reduced to ensure the stable friction coefficient and braking force.

Alternatively, as illustrated in FIG. 5, the inner circumferential surface of the rotor 2 may be processed so as to form dimples thereon. By providing the dimples, a scratching resistance between the linings 1 and the rotor 2 is increased to allow the friction coefficient to be increased. Moreover, the dimples can be formed by, for example, a blast process for spraying balls onto the inner circumferential surface with compressed air, and therefore can be manufactured at low cost. In place of recesses like the dimples, bulges may be formed.

Next, an operation of the braking apparatus according to the first embodiment is described. In FIG. 1, the energization of the coil built in the stator which is disposed to face the outer circumferential surface of the rotor 2 is stopped to electrically decelerate and stop the car of the elevator. Then, the rotation of the rotor 2 having the cylindrical shape supported by the fixed shaft 6 is stopped. Then, after the rotor 2 is completely stopped, control is performed to energize the coils 7a. As a result, the linings 1 fix the rotor 2 so as not to move the stopped car. In general, when the rotor 2 of the hoisting machine 4 rotates, the coils 7a are excited by applying a current through the coils 7a built into the fixed core 7. As a result, an electromagnetic attraction force is generated between the fixed core 7 and the movable cores 8. Then, the movable cores 8 are attracted toward the fixed core 7 so that the movable cores 8 and the fixed core 7 come into contact with each other. At this time, the springs 11 fixed to the movable cores 8 constantly act to separate the movable cores 8 away from the fixed core 7 by their own elastic force. Therefore, in order to attract the movable cores 8 toward the fixed core 7, the electromagnetic force to be generated in the coils 7a is required to be larger than the elastic force of the springs 11. As the movable cores 8 are attracted toward the fixed core 7, the supporting bolts 10 fixed to the movable cores 8, and the shoes 9 and the linings 1 supported by the supporting bolts are also attracted toward the fixed core 7. At this time, the movable cores 8, the shoes 9, and the linings 1 are separated away from the rotor 2. With the elimination of the clearances between the movable cores 8 and the fixed core 7, the clearances are generated between the linings 1 and the rotor 2 to bring about a brake-released state.

After the rotation of the rotor 2 of the hoisting machine 4 stops, the energization of the coils 7a built in the fixed core 7 stops within a short period of time. As a result, the electromagnetic attraction force of the coils 7a is lost. On the other hand, the springs 11 constantly have the elastic force. Therefore, the springs 11, which are compressed by the contact between the fixed core 7 and the movable cores 8, expand by a repelling force to separate the movable cores 8 away from the fixed core 7. At the same time, the shoes 9 and the linings 1 are pressed against the rotor 2 so that the rotor 2 is braked.

However, in the case where an electric outage or the like occurs in a state in which the car of the elevator is actuated, power supply is cut off in a state in which the rotor 2 is rotating. Therefore, the car operates by inertia so that a rope rotates the rotor 2. At the same time, as the current flow through the coils 7a is stopped by the electric outage, the linings 1 are pressed against the rotor 2 by the elastic force of the springs 11. At this time, the shoes 9 and the linings 1 are pressed against the rotor 2 in a state in which the rotor 2 is rotating. Therefore, the linings 1 and the rotor 2 slide against each other. Thereafter, the rotor 2 stops.

When the brake performs braking, the movable cores 8 are moved by the springs 11 provided to the fixed core 7 of the hoisting machine to press the shoes 9 so as to brake the rotation of the rotor 2. Therefore, in order to increase the braking force, it is preferred to increase the elastic force of the springs 11 or to increase the friction coefficient of the linings 1. However, when the elastic force of the springs 11 is increased, the electromagnetic force of the coils 7a, for attracting the movable cores 8 against the elastic force of the springs 11 when the brake is released, increases. Therefore, the amount of use of the coils 7a built in the fixed core 7 increases, resulting in a fear of increasing power consumption.

On the other hand, when the friction coefficient of the linings 1 is increased, the elastic force of the springs 11, which is required to obtain the same braking force, can be reduced. Therefore, the springs 11 can be downsized, while the electromagnetic attraction force of the coils 7a, which is required when the brake is to be released, can be reduced. Therefore, the power consumption for attracting the movable cores 8 toward the fixed core 7 with the electromagnetic attraction force of the coils 7a is suppressed to allow the size and the weight of the fixed core 7 itself to be reduced. Moreover, with the reduction in size and weight of the braking apparatus, the amount of the coils 7a, the size of the fixed core 7, and the like are reduced. As a result, time for the process can be shortened to reduce CO₂ emission in a factory.

In the state illustrated in FIG. 2 (a) in which the car of the elevator is raised or lowered, specifically, the hoisting machine 4 is actuated, the rotor 2 of the hoisting machine is rotating. At the same time, the brake is in a released state. Then, in general, the car is electrically stopped. After the rotor 2 stops, the brake functions to press the linings 1 against the rotor 2 to fix the hoisting machine so that the hoisting machine does not move. On the other hand, in an emergency such as in case of an electric outage, the brake functions in a state in which the rotor 2 is rotating. Therefore, after the carbon fibers 3 of the linings 1 and the concave and convex portions of the rotor 2 slide against each other, the rotor 2 is stopped. An extremely large number of the carbon fibers 3 and the rotor 2 have shapes which scratch each other. Therefore, the resistance at the time of sliding, that is, the friction force increases to reduce a distance required to stop the rotor 2. Moreover, the linings 1 contain the plurality of carbon fibers, which are bound so as to be arranged at a higher density, and therefore have a high stiffness and do not break. Thus, the linings 1 can stably maintain the large friction coefficient. Therefore, the force for pressing the linings 1 against the rotor 2 can be reduced. Thus, in the case where the same amount of energization of the coils 7a is set, the amount of the coils 7a decreases to reduce the size and weight of the braking apparatus. On the other hand, in the case where the amount of energization of the coils 7a is reduced, a pyrogenic property of the braking apparatus can be lowered to improve the reliability of the braking apparatus.

As described above, according to the first embodiment, the concave and convex portions are provided on the inner circumferential surface of the rotor, and the carbon fibers serving as the base material of the linings are arranged approximately perpendicularly to the direction in which the linings and the rotor slide against each other. As a result, the mutual scratching effect is generated between the fibers of the linings and the concavities and convexities on the inner circumferential surface of the rotor. Further, the resistance in the direction, in which the fibers and the concavities and convexities slide against each other, increases. As a result, the large friction coefficient can be stably maintained between the linings and the rotor.

Moreover, the large friction coefficient can be stably maintained between the linings and the rotor. Therefore, by reducing the force for pressing the linings against the rotor, the amount of coils can be reduced to reduce the size and weight of the braking apparatus. As a result, CO₂ emission at the time of manufacturing of the braking apparatus can be reduced.

Further, by reducing the force for pressing the linings against the rotor, the amount of energization of the coils is reduced while the pyrogenic property is lowered. Accordingly, the reliability of the braking apparatus is improved.

### Second Embodiment

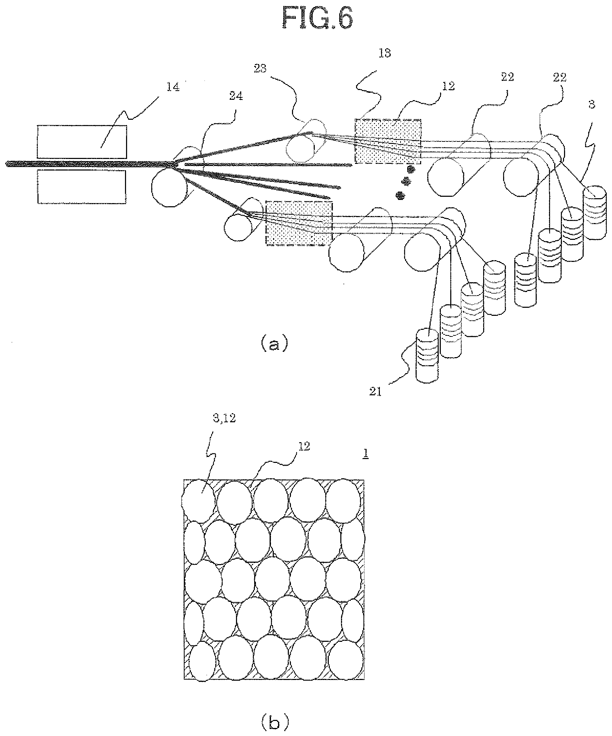

A method of manufacturing the linings 1 described above according to a second embodiment of the present invention is described. First, a configuration of a manufacturing apparatus is described. FIG. 6(a) illustrates the manufacturing apparatus for manufacturing the linings 1 obtained by binding the carbon fibers 3. FIG. 6(b) is a sectional view of the linings 1 obtained by binding the carbon fibers 3, manufactured in FIG. 6(a).

In the manufacturing apparatus illustrated in FIG. 6 (a), each of the carbon fibers 3 is wound around a curved surface of each of a plurality of bobbins 21 which are fixed. There are provided a plurality of first rollers 22 for disposing several wound carbon fibers 3 so as to be arranged in a set. As each of the carbon fibers 3, for example, a twisted carbon fiber original yarn having a diameter of about 10 microns to 17 microns is used. There is also provided a powder box 13 containing the blended material 12 corresponding to a powdery thermally-curable resin to be added to the sets, each including the several carbon fibers 3, arranged on the first rollers 22. Further, there are a plurality of rotatable second rollers 23, each having a shape which is inclined downward from both ends of the roller toward a center thereof, capable of twisting the set of the several carbon fibers 3, to which the blended material 12 adheres, into one. In addition, there is provided a third roller 24 which has a shape which is inclined downward from both ends of the roller toward a center thereof and rotates, capable of binding and twisting the several sets, which are each obtained by being twisted into one on each of the second rollers 23 and each include the several carbon fibers 3. Further, there is provided a press 14 for heating and pressure-forming the fiber bundle obtained by being twisted on the third roller 24 to bind the carbon fibers 3 to realize a higher density. Moreover, there are provided a driving machine for drawing the fiber bundle in a direction away from the press after the heating and pressure-forming in the press 14, a cutter (not shown) for cutting the linings 1 which have passed through the driving section, and a burning machine (not shown) for burning the linings 1 cut by the cutter.

FIG. 6 (b) is a sectional view of the linings 1 obtained by the manufacturing apparatus illustrated in FIG. 6(a), that is, the linings burned in the burning machine . The linings 1 illustrated in FIG. 6 (b) include the plurality of carbon fibers 3 and the blended material 12 for integrating the fibers arranged at a higher density, in which the carbon fibers 3 are firmly bundled to each other. Each of the linings 1 is, for example, 70 mm to 80 mm long and 70 mm to 80 mm wide, or has a diameter of 70 mm to 80 mm. A length after cutting with the cutter is about 5 to 10 mm.

Next, a manufacturing method according to the second embodiment is described. In FIG. 6(a), the driving machine (not shown) pulls the carbon fibers 3 while rotating the carbon fibers. As a result, the carbon fibers 3 wound around the bobbins 21 are pulled, while the carbon fibers 3 wound around the bobbins 21 are unwound. The plurality of carbon fibers 3 unwound from the plurality of bobbins 21 are arranged in rows on the first rollers. Then, the first rollers rotate to feed the fibers. Next, the plurality of carbon fibers 3 fed by the first rollers are caused to pass through the powder box 13 filled with the blended material 12 mixed in advance. After the blended material is added to the fibers, the carbon fibers 3 are twisted by each of the second roller 23. Each of the second rollers 23 has a shape which is inclined toward the center so that the carbon fibers 3 gather in the center. Therefore, in combination with the effects of the driving machine for simultaneously pulling and twisting the linings 1 corresponding to bound bodies of the carbon fibers 3 obtained by the heating and pressure-forming with the press working, the carbon fibers 3 which have passed over the second rollers 23 are bundled. By using the same procedure at the same time, the plurality of the sets of carbon fibers 3 which are twisted after the addition of the blended material are obtained. In this manner, after the plurality of the sets of the carbon fibers 3 obtained by being twisted are further repeatedly twisted on the roller 24 to obtain a predetermined thickness, the obtained single fiber bundle is formed under the pressure and heating with the press 14 and then is cut to a predetermined length. In this manner, the blended material 12 corresponding to the thermally-curable resin, which bundles the fiber bundle, is hardened. Then, after the cutting with the cutter (not shown), the burning is performed in the burning machine (not shown) to reinforce the resin. As a result, the formed linings 1, in which the plurality of the sets of carbon fibers 3 are arranged at a higher density, can be obtained. In the present invention, the plurality of twisting steps are separately provided. Therefore, the density of the carbon fibers becomes higher to increase the stiffness. Further, the linings 1, in which the blended material 12 is more likely to adhere to the carbon fibers to provide a high bundling force, can be produced. Accordingly, even when the linings 1 slide against the rotor 2, the linings 1 do not break.

The blended material 12 filled in the powder box 13 includes a friction modifier, a filler, a binder, and the like. Examples of the friction modifier include cashew dust, rubber dust, copper, zinc, alumina, and zirconia. Examples of the filler include calcium carbonate, barium sulfate, calcium sulfate, and tin sulfide. Examples of the binder include a phenol resin, a melanin resin, and a polyimide.

According to the manufacturing method illustrated in FIGS. 6, by merely cutting the single fiber bundle obtained by burning, the plurality of linings can be continuously manufactured. An expensive die is not required, and therefore the linings can be manufactured at low cost.

Moreover, the plurality of twisting steps are separately provided. Therefore, the density of the carbon fibers becomes higher to increase the stiffness. In addition, the blended material 12 is more likely to adhere to the carbon fibers to allow the production of the linings with a high bundling force.

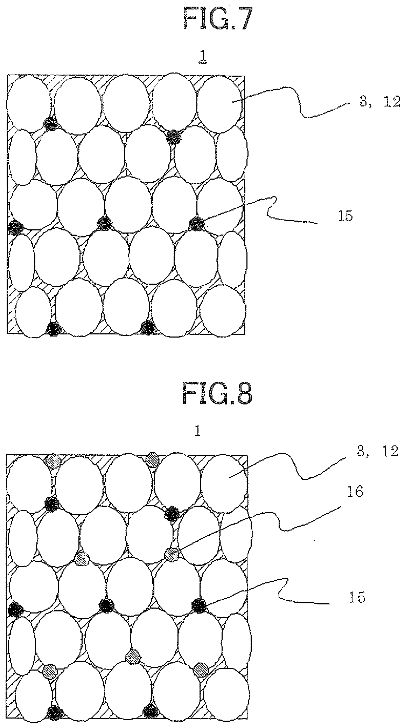

FIG. 7 illustrates the lining 1 into which cord-like high friction materials 15, each corresponding to a cord-like rubber material, are mixed. As illustrated in FIG. 7, by twisting the cord-like high friction materials 15, each corresponding to a friction material having a large friction coefficient such as a rubber material, having a cord-like shape, together with the fibers before the heating and forming of the carbon fibers 3, the friction coefficient can be further increased. In general, granular rubbers or the like are sometimes provided so as to increase the friction coefficient. However, the granular rubbers sometimes drop off due to surface degradation caused by wear or drop off due to curing caused by frictional heat. On the other hand, with the manufacturing method illustrated in FIGS. 6, a strength is ensured by the materials arranged to extend in the length direction. Therefore, the cord-like high friction materials 15 do not drop off. Moreover, even when a temperature increases due to the frictional heat, the surface degradation merely occurs. Thus, a stable friction coefficient can be ensured. The friction material has a length approximately equal to that of the carbon fibers 3 included in the linings 1.

FIG. 8 is a sectional view illustrating several types of materials mixed into the linings 1 together with the carbon fibers 3. The material to be mixed into the linings 1 is not limited to one type, that is, the cord-like high friction material 15. As illustrated in FIG. 8, by twisting a plurality of types of elongated friction materials such as wire-like antiwear materials 16 together with the fibers, the linings 1 having various friction characteristics can be manufactured at low cost. As the antiwear materials 16, for example, tungsten, molybdenum, or the like is used.

The example where the linings 1 are manufactured by the manufacturing apparatus is described above. In some cases, however, a lining 20 larger than the linings 1 obtained by the above-mentioned manufacturing apparatus is required. In this case, it is conceivable to increase the number of carbon fibers 3 used in the manufacturing apparatus. Alternatively, a plurality of segments, each having a reduced number of carbon fibers 3 included in each of the linings 1 illustrated in FIG. 6(b), may be connected to manufacture the lining. Here, the segment constitutes apart of the lining 20. The plurality of segments connected in parallel to each other so as to be integrated can be obtained as the lining.

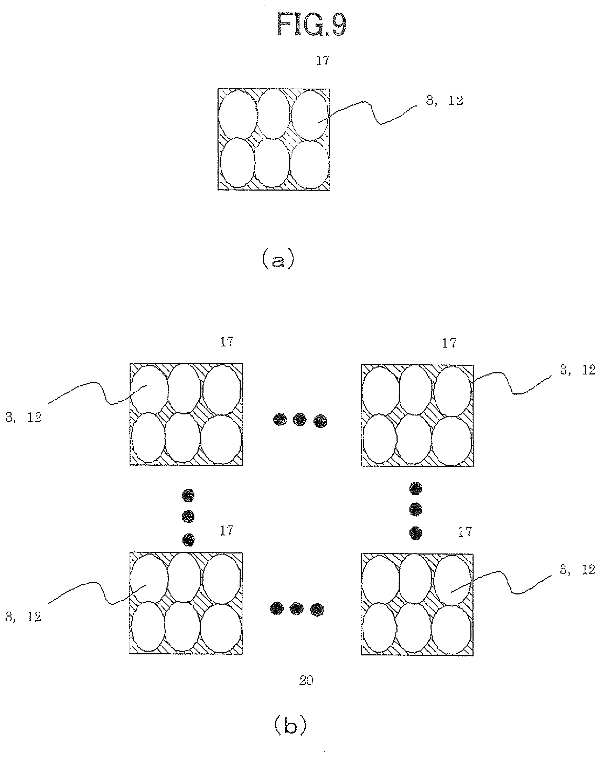

FIG. 9 (a) is a sectional view of a segment 17 and corresponds to FIG. 6(b). FIG. 6(b) illustrates the lining itself which is to be mounted to each of the shoes 9 of the hoisting machine, whereas FIG. 9(b) merely illustrates a part of each of the linings.

FIG. 9(b) is a sectional view of the lining 20 obtained by connecting a large number of the segments 17 to one another. As illustrated in FIGS. 9, the lining 20 having a large size can be manufactured by connecting a plurality of the segments 17 of the lining in parallel. The segment 17 includes the plurality of carbon fibers 3 and the blendedmaterial 12 for hardening and bundling the carbon fibers. In order to change the number of carbon fibers 3 included in one segment, it is only required to reduce the number of carbon fibers 3 used in the above-mentioned manufacturing apparatus. In this manner, a large number of the segments 17 illustrated in FIG. 9(a), each being smaller than each of the linings 1 illustrated in FIG. 6(b), are bonded by an adhesive or the like so as to be arranged in parallel to one another as illustrated in FIG. 9(b), thereby manufacturing the lining 20. Then, the lining 20 formed of the plurality of segments 17 is directly bonded to each of the shoes 9 by the adhesive or the like or is bonded to each of the shoes 9 through the intermediation of a board.

As described above, the plurality of segments 17 , each obtained by reducing the number of carbon fibers 3 used in the above-mentioned manufacturing apparatus, are bonded so as to be arranged in parallel to one another. In this manner, the number of fibers to be twisted can be reduced. As a result, the numbers of bobbins, rollers, and the like are reduced to enable reduction in size of facility. Further, C0₂ emission in a factory is suppressed to enable low-cost manufacturing.

### Third Embodiment

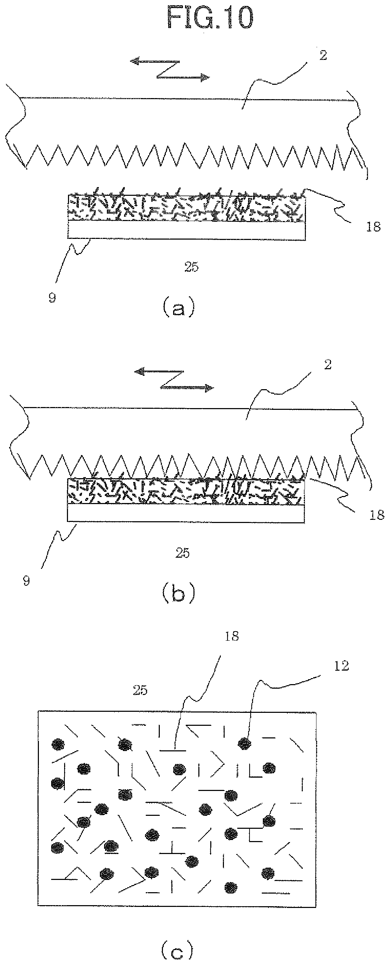

Configurations of braking linings and the rotor according to a third embodiment are described referring to the figures. The configuration of the hoisting machine 4 or the like is the same as that of the first embodiment except for the shape of each of the linings for stopping the rotor 2, and therefore the description thereof is herein omitted. In the first embodiment, the linings 1 containing the carbon fibers 3 arranged approximately perpendicularly to the direction of relative sliding are described. The carbon fibers 3 can also be cut into a small size to increase the friction coefficient. FIG. 10(a) illustrates the relationship of arrangement of a lining containing short fibers and the rotor 2 corresponding to the rotary body at the time when the brake is released. FIG. 10(b) illustrates the relationship of arrangement of the lining containing the short fibers and the rotor 2 at the time when the brake performs braking. FIG. 10 (c) is a sectional view of the configuration of the lining.

FIG. 10 (a) illustrates a state at the time when the brake is released, which corresponds to a state in which a clearance is generated between the rotor 2 and a lining 25. As in the case of the first embodiment, the operation is performed by the rotor 2 of the hoisting machine, which has a surface processed to have a predetermined surface shape, the linings 25, each containing short fibers 18 obtained by cutting the carbon fibers 3 described in the second embodiment into a small size, and the shoes 9 for fixing the linings 25 and interlocking with the movable cores 8 of the hoisting machine 4 through the intermediation of the supporting bolts 10. When the brake performs braking, the short fibers 18 formed to be contained in the linings 25 and the concave and convex portions on the rotor 2 scratch each other, as illustrated in FIG. 10(b). In FIG. 10(c), the linings 25 are cured with the blended material 12 containing the powdery thermally-curable resin. By the exposure of the short fibers 18 on the surface, the resistance generated when the fibers having the high stiffness scratch the inner circumferential surface of the rotor 2 becomes larger. Therefore, the friction coefficient can be increased.

The lining 25 as described above contains the short fibers 18 obtained by cutting the carbon fibers 3 into a small size and the blended material 12, and is manufactured in a conventional processing process in which the short fibers and the blended material are mixed to be introduced into a die and are then pressurized by the press for forming while the die is heated. The surfaces of the linings 25 are maintained in a rough state in which the projecting short fibers are raised. In this manner, the conventional manufacturing steps of the lining 1 are not particularly changed. Therefore, it is possible to save spending on equipment, and the high-quality linings can be obtained at low cost.

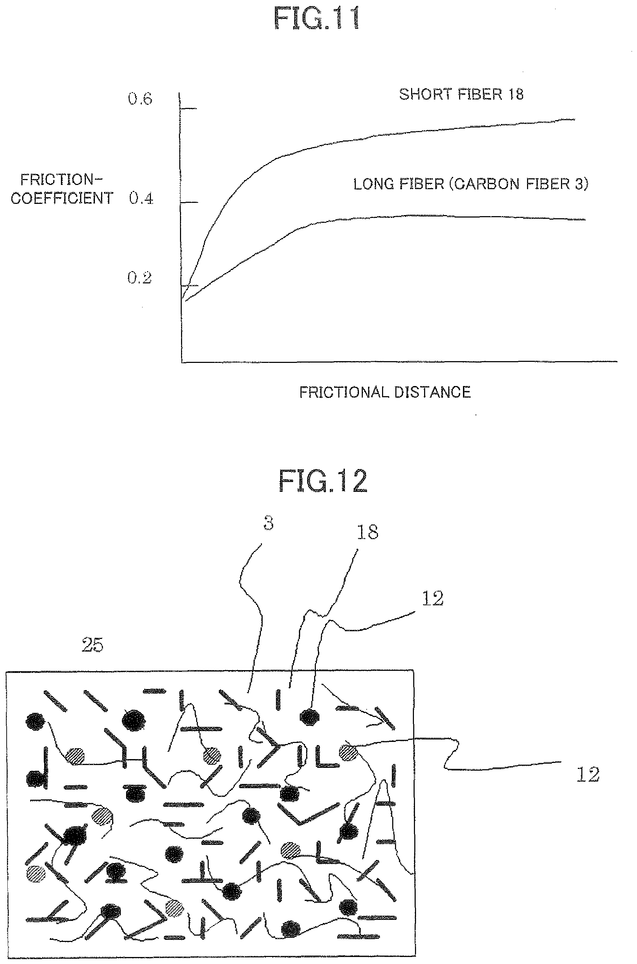

Next, the operation of the braking apparatus according to the third embodiment is described. The same operation as that of the first embodiment is omitted. FIG. 11 shows the relationship between the friction coefficient, a frictional distance, and a length of the fibers as parameters. The horizontal axis of FIG. 11 indicates the frictional distance, whereas the vertical axis of FIG. 11 indicates the friction coefficient. The friction coefficient means a ratio of the friction force acting on sliding surfaces in a state in which the rotors 2 and the linings 25 slide against each other to a force perpendicularly pressing the sliding surfaces. The frictional distance means a distance over which the linings 25 and the rotor 2 are held in contact with each other and slide against each other while the rotor 2 is rotating. The short fiber 18 is obtained by cutting the carbon fibers 3 into a small size, whereas a long fiber is the carbon fiber 3 itself.

In FIGS. 10 and 11, from the time at which the linings 25 come into contact with the rotor 2 until the contact between the linings 25 and the rotor 2 becomes smooth, that is, from the time at which the linings 25 start pressing the rotor 2 until a portion having a high contact surface pressure between the linings and the rotor is selectively eliminated to uniformize the contact surface pressure, the friction coefficient is small and is not stabilized. However, in a state in which the contact between the linings 25 and the rotor 2 becomes smooth after the friction is generated over a predetermined distance, the friction coefficient is stabilized at an approximately constant value. According to an experiment, when the length of the short fibers 18 was set to 0.1 mm or more and 1 mm or less, the friction coefficient between the linings 25 and the rotor 2 exceeded 0.5. Therefore, a large value can be obtained.

In the description given above, the short fibers 18 are used as the base material. However, as illustrated in FIG. 12, the short fibers 18 and the carbon fibers 3 which are longer than the short fibers can be used as the base materials. By using the carbon fibers 3 and the short fibers 18 as the base materials, the lining having large mechanical strengths can be obtained. The short fibers are 0.1 mm or more and 1 mm or less in length, whereas the carbon fibers 3 are 5 mm or more and 10 mm or less in length. When only the short fibers 18 are used as the base material, the fibers are unlikely to tangle. Therefore, the mechanical strengths such as a shear strength and a bending strength become small in some cases. Specifically, the carbon fibers 3 have a function of preventing the drop-off of the short fibers 18 or the like, whereas the short fibers 18 have a function of increasing the friction coefficient. Therefore, by using the long fibers and the short fibers, the advantages of the two are enjoyed. Although the example where the carbon fibers having the two lengths are used is described in FIG. 12, carbon fibers having three or more lengths may be used by, for example, adding fibers having a length between that of the short fibers 18 and that of the carbon fibers 3.

As described above, according to the third embodiment, the friction coefficient between the linings 25 and the rotor 2 is increased by using the short fibers 18 . Therefore, the elastic force of the springs provided to the fixed core 7 and the electromagnetic attraction force of the coils 7a built into the fixed core 7 can be correspondingly reduced. Accordingly, the size and weight of the braking apparatus and the power consumption of the braking apparatus can be reduced.

Moreover, by using the fibers having different lengths in combination, the linings having the large friction coefficient and the large mechanical strengths can be obtained. Accordingly, the size and weight of the braking apparatus and the power consumption of the braking apparatus can be reduced.

### Fourth Embodiment

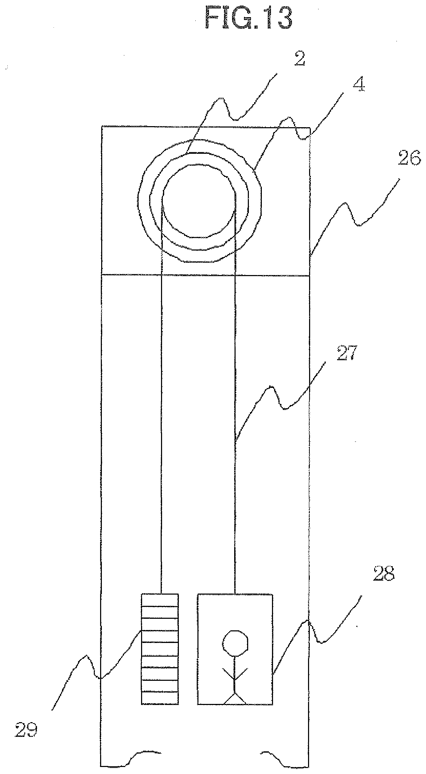

Next, an elevator system according to a fourth embodiment is described referring to FIG. 13. The configuration of the hoisting machine is the same as that described above, and therefore the description thereof is herein omitted. FIG. 13 illustrates a configuration of an elevator system using the hoisting machine including the braking apparatus according to this embodiment. A machine room 26 is provided on a top floor of a building. Onto a floor of the machine room 26, the hoisting machine 4 described in the first embodiment is fixed. As described above, the rotor 2 which rotates about the fixed shaft 6 through the bearing is provided to the hoisting machine 4. The sheave mounted at a different level in the direction of the fixed shaft of the rotor 2 rotates together with the rotor 2. A rope 27 for suspending a car 28 and a counterweight 29 is provided to the sheave. The car 28 is held in balance with the counterweight 29.

When power is supplied from a power-supply section (not shown) to the stator of the hoisting machine 4, the rotor 2 of the hoisting machine 4 rotates. Along with the rotation of the rotor 2, the sheave rotates. As a result, the counterweight 29 and the car 28, which are respectively fixed to both ends of the rope 27 suspended from the sheave, operate vertically.

Although the configuration, in which the hoisting machine 4 is provided in the machine room of the building, is described in this embodiment, the hoisting machine may be provided, for example, on a wall inside a hoistway or the like.

The braking apparatus included in the hoisting machine 4 in this embodiment has the configuration, for example, as illustrated in FIG. 1, and therefore allows the large friction coefficient to be stably maintained. Therefore, the electromagnetic attraction force of the coils 7a built in the braking apparatus can be reduced. Accordingly, the power consumption necessary to release the brake at the time of the operation of the elevator is reduced. As a result, the power consumption of the brake apparatus and the power consumption of the elevator can be reduced.

### Industrial Applicability

The present invention can be used not only for the hoisting machines for the elevators but also for industrial equipment such as brakes for various types of tires of automobiles, electric motors, and hoists, brakes for motors, clutch systems, and the like.

### Reference Signs List

- 1: lining

- 2: rotor
- 3: carbon fiber
- 4: hoisting machine
- 6: fixed shaft
- 7: fixed core
- 7a: coil
- 8: movable core
- 9: shoe
- 10: supporting bolt
- 11: spring
- 12: blended material
- 13: powder box
- 14: press
- 15: cord-like high friction material
- 16: antiwear material
- 17: segment
- 18: short fiber
- 19: housing
- 20: lining
- 21: bobbin
- 22: first roller
- 23: second roller
- 24: third roller
- 25: lining
- 26: machine room
- 27: rope
- 28: car
- 29: counterweight
- 30: supporting portion

## Claims

1. A method of manufacturing a brake lining (1, 20, 25), comprising:
an attaching step of attaching, to fibers (3), a blended material (12) for bundling the fibers (3) while drawing the fibers (3) by a driving machine for drawing multiple fibers (3);
a bundling step of repeatedly twisting and bundling the fibers (3) to which the blended material (12) is attached in the attaching step;
a forming step of heating and pressure-forming a fiber bundle obtained by bundling the fibers (3) in the bundling step; and
a cutting step of cutting the fiber bundle formed in the forming step to obtain the brake lining (1, 20, 25).

2. A method of manufacturing a brake lining (1, 20, 25) according to claim 1, wherein, in the bundling step, the fibers (3) are twisted together with a friction material having a large friction coefficient.

3. A method of manufacturing a brake lining (1, 20, 25) according to claim 1, further comprising a step of connecting a plurality of the fiber bundles in parallel by an adhesive to integrate the fiber bundles, the fiber bundles each being obtained by being cut in the cutting step.

## Patentansprüche

1. Verfahren zur Herstellung eines Bremsbelags (1, 20, 25), umfassend:
einen Anbringungsschritt zum Anbringen eines Mischmaterials (12) an Fasern (3), um die Fasern (3) zu bündeln, während die Fasern (3) durch eine Antriebsmaschine zum Ziehen von mehreren Fasern (3) gezogen werden;
einen Bündelungsschritt zum mehrmaligen Verdrillen und Bündeln der Fasern (3), an denen im Anbringungsschritt das Mischmaterial (12) angebracht wurde;
einen Formungsschritt zum Heizen und Druckformen eines Faserbündels, das im Bündelungsschritt durch Bündeln der Fasern (3) erhalten wurde; und
einen Schneidschritt zum Schneiden des im Formungsschritt gebildeten Faserbündels, um den Bremsbelag (1, 20, 25) zu erhalten.

2. Verfahren zur Herstellung eines Bremsbelages (1, 20, 25) nach Anspruch 1, bei dem im Bündelungsschritt die Fasern (3) mit einem Reibmaterial mit einem großen Reibungskoeffizienten verdrillt werden.

3. Verfahren zur Herstellung eines Bremsbelages (1, 20, 25) nach Anspruch 1, ferner umfassend einen Schritt des Verbindens einer Vielzahl der Faserbündel parallel zueinander durch einen Klebstoff, um die Faserbündel zu integrieren, wobei die Faserbündel durch Schneiden im Schneidschritt erhalten werden.

## Revendications

1. Procédé de fabrication d'une garniture de frein (1, 20, 25), comprenant :
- une étape de fixation pour fixer, sur des fibres (3), un matériau mélangé (12) pour regrouper des fibres (3) lors de l'étirage des fibres (3) par une machine d'entraînement pour étirer des fibres multiples (3) ;
- une étape de regroupement pour torsader et regrouper de manière répétitive les fibres (3) auxquelles le matériau mélangé (12) est fixé dans l'étape de fixation ;
- une étape de formation pour former par chauffage et sous pression un faisceau de fibres obtenu en regroupant les fibres (3) dans l'étape de regroupement ; et
- une étape de coupe pour couper le faisceau de fibres formé dans l'étape de formation pour obtenir la garniture de frein (1, 20, 25).

2. Procédé de fabrication d'une garniture de frein (1, 20, 25) selon la revendication 1, dans lequel, lors de l'étape de regroupement, les fibres (3) sont torsadées ensemble avec un matériau de friction ayant un coefficient de friction important.

3. Procédé de fabrication d'une garniture de frein (1, 20, 25) selon la revendication 1, comprenant en outre une étape de liaison d'une pluralité des faisceaux de fibres en parallèle par un adhésif pour intégrer ensembles les faisceaux de fibres, les faisceaux de fibres étant obtenus chacun en étant coupés dans l'étape de coupe.
